**Europäisches Patentamt**

(19) **European Patent Office**

**Office européen des brevets**

(11) Veröffentlichungsnummer: **0 111 157**
**B1**

(12) # EUROPÄISCHE PATENTSCHRIFT

(45) Veröffentlichungstag der Patentschrift:
**22.06.88**

(51) Int. Cl.⁴: **H 04 N 9/81,** H 04 N 11/08

(21) Anmeldenummer: **83111048.1**

(22) Anmeldetag: **05.11.83**

(54) **Verfahren zur Übertragung, insbesondere zur Aufzeichnung und Wiedergabe von Fernsehsignalen.**

(30) Priorität: **11.11.82 DE 3241699**
**04.12.82 DE 3244942**

(43) Veröffentlichungstag der Anmeldung:
**20.06.84 Patentblatt 84/25**

(45) Bekanntmachung des Hinweises auf die Patenterteilung:
**22.06.88 Patentblatt 88/25**

(84) Benannte Vertragsstaaten:
**AT BE CH DE FR GB IT LI LU NL SE**

(56) Entgegenhaltungen:
**EP - A - 0 021 863**
**US - A - 3 637 919**
**US - A - 3 781 463**
**US - A - 4 084 181**
**US - A - 4 245 235**
**US - A - 4 335 393**

**PATENTS ABSTRACTS OF JAPAN, Band 4, Nr. 175,**
**(E-36)(657), 3. Dezember 1980**
**Fernseh- und Kinotechnik, 84 Jahrgang, Nr. 12/1980,**
**Seite 451-458**

(73) Patentinhaber: **Deutsche Thomson-Brandt GmbH,**
**Hermann-Schwer-Strasse 3 Postfach 1307,**
**D-7730 Villingen-Schwenningen (DE)**

(72) Erfinder: **Geiger, Erich, Panoramaweg 19,**
**D-7731 Unterkirnach (DE)**
Erfinder: **Meyer, Heinz, Tiisiter Strasse 18,**
**D-7730 Villingen-Schwenningen (DE)**

## Beschreibung

Die Erfindung geht aus von einem Verfahren zur Übertragung, insbesondere Aufzeichnung und Wiedergabe, von Fernsehsignalen in analoger Form, wobei die Leuchtdichteinformation während des Hinlaufs der Zeilenperiode und die Farbinformation zeitkomprimiert sequentiell während der restlichen Zeit der Zeilenperiode innerhalb der Austastzeit aufgezeichnet wird.

Ein derartiges Verfahren wird unter dem Titel: «Timeplex» – ein serielles Farbcodierverfahren für Heim-Videorecorder in der Zeitschrift «Fernseh- und Kinotechnik» 34. Jahrgang Nr. 12/1980 Seiten 451–458 sowie in der DE-AS-2 629 706 beschrieben.

Dieses Verfahren hat sich bei Farbfernsehsignalen, die über Kanäle mit eingeschränkter Qualität übertragen werden sollen, wie z.B. bei Videorecordern, gut bewährt. Hierbei werden das Luminanzsignal und die Farbdifferenzsignale zeilenfrequent seriell übertragen bzw. aufgezeichnet. Das geschieht in der Weise, dass das Luminanzsignal während der Zeilenhinlaufzeit aufgezeichnet wird, während die beiden Farbdifferenzsignale abwechselnd um den Faktor 5 zeitkomprimiert während der Austastzeit aufgezeichnet bzw. übertragen werden.

In die Austastlücke muss auch noch der Zeilensynchronimpuls und ein Klemmpegel eingetastet sein. Da die Zeit jedoch für die Eintastung dieser Signale durch das Vorhandensein der Farbdifferenzsignale sehr begrenzt ist, wurde vorgeschlagen, von Zeile zu Zeile abwechselnd den Zeilensynchronimpuls und den Klemmimpuls einzutasten. Deshalb wurde zeilensequentiell ein Zeilenimpuls mit einer Dauer von 1,6 µsec und innerhalb des darauffolgenden Zeilenrücklaufs ein ebenso langer Klemmimpuls eingetastet. Es hat sich jedoch gezeigt, dass ein derartiger kurzer Impuls zu Synchronisationsschwierigkeiten führt, zumal wenn er nur jede zweite Zeile vorhanden ist, insbesondere bei der Bildaufzeichnung und Wiedergabe mit Videorecordern für den Heimgebrauch.

Es ist bekannt, bei der Aufzeichnung von Farbsignalen ein zusätzliches ausserhalb des Übertragungsbereichs des Farbsignals liegendes Steuersignal mit aufzuzeichnen, welches entsprechend den Amplitudenänderungen dieses Steuersignals die Amplitude des Farbsignals ändert (DE-AS-1 808 439).

Es ist ausserdem bekannt, einen von Zeile zu Zeile in der Amplitude wechselnden Impuls zusammen mit einem Farbsignal aufzuzeichnen, der auf Grund einer durchgeführten Frequenzmodulation in Form einer zeilenweise wechselnden Frequenz aufgezeichnet wird und der ausser zur Zeilensynchronisation auch zur Unterscheidung zwischen den beiden zeilensequentiell aufgezeichneten Farbdifferenzsignalen dient (US-PS-3 717 725).

Auch ist es bekannt, bei einem nach dem Timeplex-System erzeugten Signal, bei welchem abwechselnd die beiden Farbdifferenzsignale R–Y und B–Y übertragen werden, eine Markierung für die Schaltphase zwischen den beiden Farbdifferenzsignalen vorzusehen. Für die Identifikation der Schaltphase wird jeweils in jeder zweiten Zeile des übertragenen Fernsehsignals ein Identifikationsimpuls in das analoge Signal während der Dauer des Zeilensynchronimpulses eingefügt. Das Identifikationssignal ist demnach ein Bestandteil des analogen Fernsehsignals (US-A-4 335 393).

Der Erfindung liegt die Aufgabe zugrunde, eine sichere Zeilensynchronisation bei der Wiedergabe von im Timeplex-Verfahren übertragenen Signalen zu gewährleisten.

Diese Aufgabe wird durch die im Patentanspruch 1 angegebene Massnahme gelöst.

Nachstehend soll das Wesentliche der Erfindung am Beispiel der Aufzeichnung eines Timeplex-Signals mit Hilfe der Zeichnungen erläutert werden.

Fig. 1 zeigt ein Spannungs-Zeit-Diagramm des im Timeplex-Verfahren erzeugten Signals.

Fig. 2 bis 5 zeigen Blockschaltbilder zur Durchführung des angemeldeten Verfahrens.

Fig. 6 zeigt den Frequenzgang des FM-Übertragungsbereichs des Magnetkopfsignals mit den Trägerfrequenzen des zusätzlichen Impulssignals.

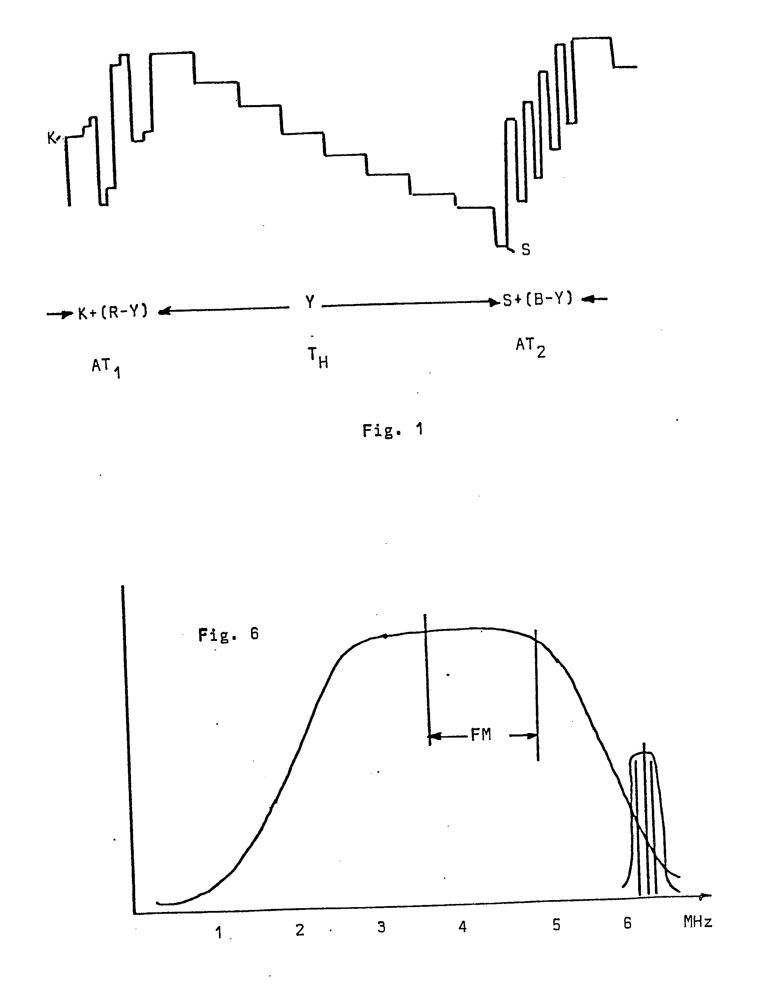

In Fig. 1 ist das nach dem Timeplex-Verfahren erzeugte FBAS-Signal aufgezeichnet. Man erkennt das den grösseren Teil der Zeilenperiode während der Zeit $T_H$ einnehmende Luminanzsignal Y und die in den Austastlücken $AT_1$ und $AT_2$ aufgezeichneten zeitkomprimierten Farbdifferenzsignale (R–Y), (B–Y), wobei innerhalb der einen Austastlücke $AT_1$ ein Klemmimpuls K und während der nächsten Austastlücke $AT_2$ ein Synchronimpuls S übertragen wird.

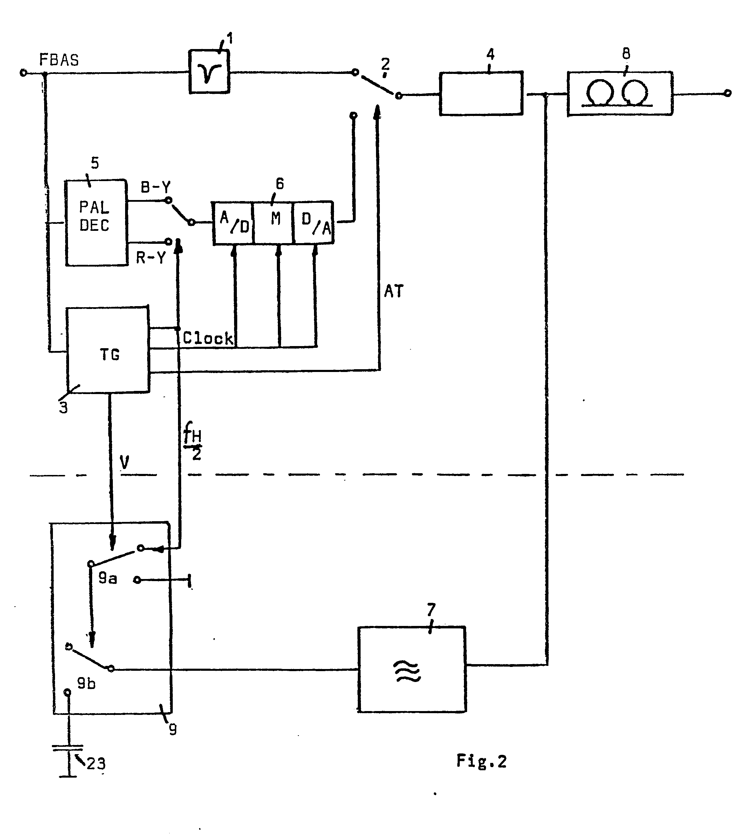

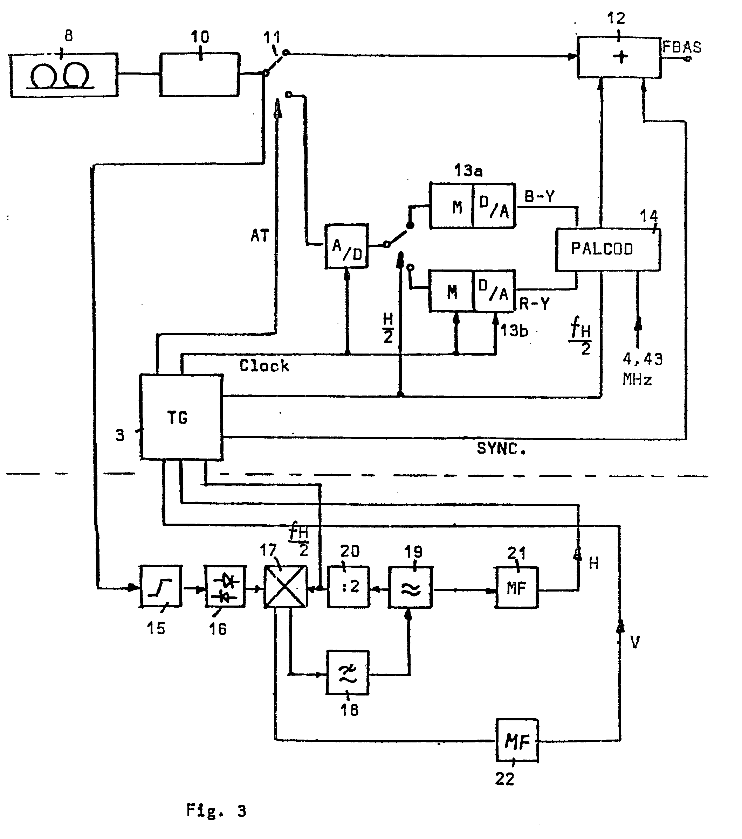

In Fig. 2 und 3 wird nachfolgend an einem Blockschaltbild das Wesentliche der Erfindung erläutert. Hierbei sind die sich auf das bekannte Timeplex-Verfahren beziehenden Schaltungsbaugruppen oberhalb der gestrichelten Linie eingezeichnet, während unterhalb dieser Linie die für das erfindungsgemässe Verfahren erforderlichen Baugruppen aufgezeichnet sind.

Zunächst sei kurz auf das Timeplex-Verfahren eingegangen. In Fig. 2 wird die Aufnahme eines Video-Signals auf ein Magnetband beschrieben. Das Y-Signal gelangt über eine Farbträgerfalle 1 an einen Schalter 2, der durch einen Taktgeber 3 in der Weise gesteuert ist, dass das Y-Signal während des Zeilenhinlaufs an den Aufnahmekanal 4, welcher aus dem FM-Modulator der Preemphasis und dem Aufsprechverstärker besteht, geschaltet ist. Während der Zeilenrücklaufzeit TA wird abwechselnd zeilenfrequent durch den fH/2-Takt das vom PAL-Dekoder 5 aufbereitete R–Y-Signal bzw. B–Y-Signal an den Aufnahmekanal 4 geschaltet, nachdem sie in einem Speicher 6 mit Hilfe eines vom Taktgenerator 3 erzeugten Einlesetaktes von z.B. 2 MHZ eingelesen und mit Hilfe eines Auslesetaktes von 10 MHZ ausgelesen werden, wodurch eine Zeitkompression um den Faktor 5 entsteht.

Nach der Erfindung wird nun ein mit Hilfe eines Oszillators 7 erzeugtes zusätzliches Synchronsignal an den Aufnahmekopf des Magnetbandgerätes 8 gelegt, das zusammen mit den zeitkomprimierten Farbdifferenzsignalen R–Y, B–Y und dem
Y-Signal aufgezeichnet wird. Die Trägerfrequenz
des Synchronsignals liegt vorzugsweise am oberen Übertragungsbereich des Magnetkopfsignals.
Die Amplitude dieses Signals ist so gewählt, dass
eine Beeinträchtigung der Y- und Chromasignale
vermieden wird. Die für die PAL-Norm notwendige
Kennung kann mit Hilfe einer geschalteten Trägerfrequenz für das Synchronsignal erzeugt werden. Hierzu wird der Oszillator 7 durch einen aus
dem Taktgenerator 3 entnommenen halbzeilenfrequenten Steuertakt über eine Stufe 9 in der Frequenz symmetrisch um eine Mittenfrequenz umgeschaltet, indem der halbzeilenfrequente Steuertakt über den Schalter 9a – hier der Einfachheit
halber als mechanischer Schalter dargestellt –
den Schalter 9b umtastet. Dadurch wird ein Kondensator 23 wechselweise an den Oszillator geschaltet. Die Wirkung des Steuertaktes fH/2 wird
durch vertikalfrequentes Umschalten des Kontaktes 9a mit Hilfe eines dem Taktgenerator 3 entnommenen Steuertaktes V ausgeschaltet. Diese
Massnahme ermöglicht auf der Wiedergabeseite
die Rückgewinnung des Vertikalsynchronimpulses wie später noch erläutert wird.

Mit Hilfe der Fig. 3 soll nachstehend die Aufbereitung des zur Synchronisierung dienenden Impulses erläutert werden. Das vom Aufzeichnungsgerät 8 abgegebene Signal wird in einem Wiedergabekanal 10, der aus einem Wiedergabeverstärker, einem Dropoutcompensator, einem Begrenzer, einem FM-Demodulator und einer Deemphasis besteht, verstärkt und das Helligkeitssignal Y
gelangt von dort über einen vom Taktgeber 3 gesteuerten Schalter 11 während der Zeilenhinlaufzeit an eine Addierstufe 12. In einem Nebenzweig
wird mit Hilfe eines vom Taktgeber 3 gesteuerten
Speichers 13a/13b und eines PAL-Coders 14 das
Farbsignal dekomprimiert wieder über die Addierstufe 12 zu einem vollständigen FBAS-Signal umgeformt, welches von einem Fernsehempfänger
wiedergegeben wird. Die Dekompression geschieht in der Weise, dass der Speicher 13 mit
einem Takt von 10 MHZ eingelesen und mit einem
Takt von 2 MHZ wieder ausgelesen wird. Das zur
Synchronisation des Fernsehempfängers notwendige Synchronsignal wird auf folgende Weise zurückgewonnen und ebenfalls an die Addierstufe
12 gelegt. Das während der Aufnahme aufgezeichnete Trägersignal wird über eine das Signal begrenzende und verstärkende Einrichtung 15 an
einen Phasendiskriminator 16 geschaltet. Der
Phasendiskriminator 16 ist auf eine Frequenz abgestimmt, die zwischen den Trägerfrequenzen
des Synchronsignals liegt. Durch den Phasendiskriminator 16 oder eine äquivalente Schaltung
werden Signale wechselnder Polarität erzeugt.
Das erzeugte Rechtecksignal mit halber Zeilenfrequenz dient als Referenzfrequenz einer Phase-
locked-loop-Schaltung (PLL), bestehend aus dem
mit Zeilenfrequenz schwingenden spannungsgesteuerten (VCO) Oszillator 19, dem die Oszillatorfrequenz halbierenden Teiler 20, dem Phasenkomparator 17 und dem Tiefpass 18. Die Arbeitsweise einer derartigen Schaltung kann als bekannt vorausgesetzt werden. Eine an den Oszillator 19 geschaltete monostabile Kippstufe 21 erzeugt horizontalfrequente Synchronimpulse, die
über den Taktgenerator zusammen mit den ebenfalls regenerierten Vertikalsynchronimpulsen an
die Addierstufe 12 gelangen. Die Vertikalsynchronimpulse werden mit Hilfe einer weiteren monostabilen Kippstufe 22 erzeugt, der Triggerimpulse
aus dem Phasenkomparator 17 erhält, welche
durch das zuvor beschriebene Aussetzen der
halbzeilenfrequenten Impulse fH/2 während des
Bildrücklaufs am Ausgang des Phasenkomparators 17 entstehen.

In Fig. 6 ist der FM-Übertragungsbereich des
Kopfsignals aufgetragen und die Frequenzlage
des Trägers des eingetasteten Synchronimpulses,
der am oberen Ende des Übertragungsbereichs
liegen kann.

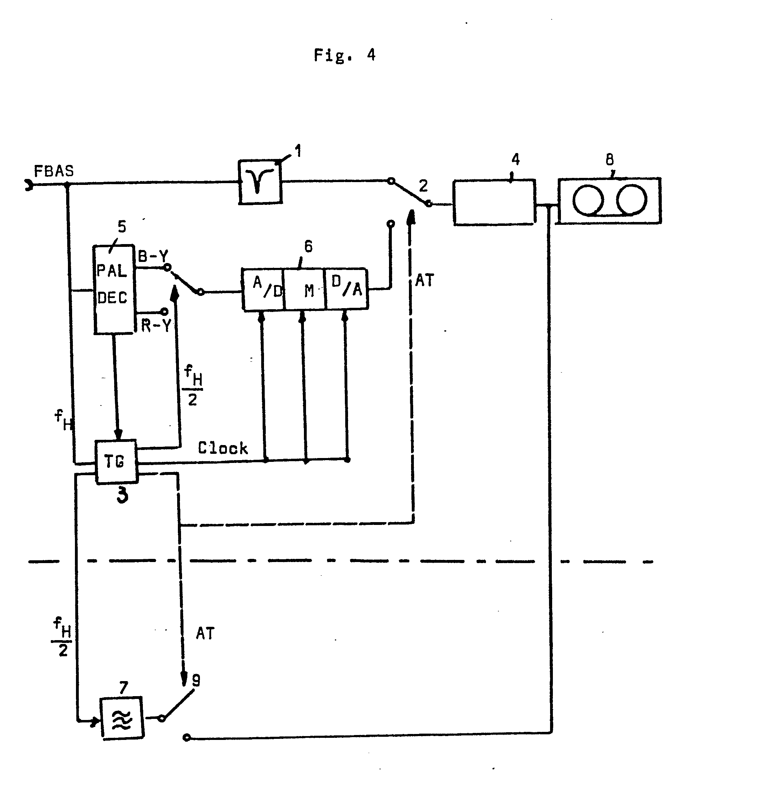

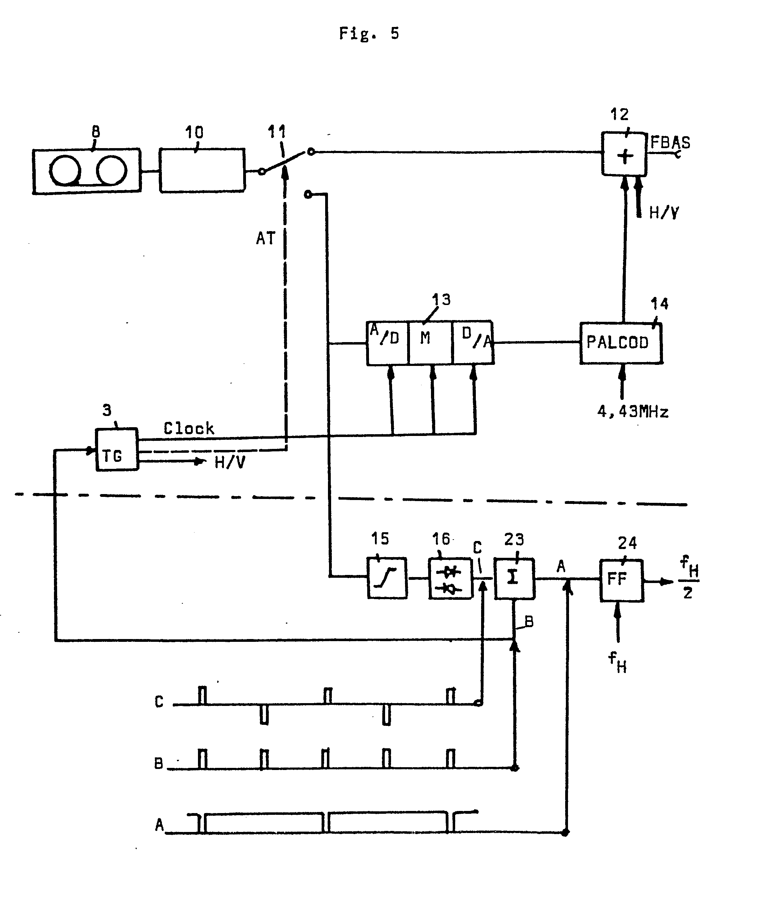

Ein weiteres Ausführungsbeispiel des angemeldeten Verfahrens wird nachstehend mit Hilfe der
Fig. 4 und 5 beschrieben.

Das Y-Signal gelangt über eine Farbträgerfalle
1 an einen Schalter 2, der durch einen Taktgeber
3 in der Weise gesteuert ist, dass das Y-Signal
während des Zeilenhinlaufs an den Aufnahmekanal 4, welcher aus dem FM-Modulator der Preemphasis und dem Aufsprechverstärker besteht, geschaltet ist. Während der Zeilenrücklaufzeit AT
wird abwechselnd zeilenfrequent durch den fH/2-
Takt das vom PAL-Dekoder 5 aufbereitete (R–Y)-
Signal bzw. (B–Y)-Signal an den Aufnahmekanal 4
geschaltet, nachdem sie in einen Speicher 6 mit
Hilfe eines vom Taktgenerator 3 erzeugten Einlesetaktes von z. B. 2 MHZ eingelesen und mit Hilfe
eines Auslesetaktes von 10 MHZ wieder ausgelesen werden, wodurch eine Zeitkompression um
den Faktor 5 entsteht.

Es wird ein mit Hilfe eines Oszillators 7 erzeugter geträgerter Impuls über einen durch den Taktgeber 3 während der Zeilenrücklaufzeit geschlossenen Kontakt 9 an den Aufnahmekopf des Magnetbandgerätes 8 gelegt, so dass zusammen mit
den zeitkomprimierten Farbdifferenzsignalen R–Y
und B–Y dieser Impuls mit aufgezeichnet wird. Die
Trägerfrequenz des eingetasteten Impulses liegt
auch hierbei vorzugsweise am oberen Übertragungsbereich des Magnetkopfsignals. Die Amplitude dieses Impulssignals ist so gewählt, dass
eine Beeinträchtigung des Chrominanzsignals
vermieden wird. Die für die PAL-Norm notwendige
Kennung kann mit Hilfe einer geschalteten Trägerfrequenz für den Impuls erzeugt werden. Hierzu wird der Oszillator 7 halbzeilenfrequent durch
einen vom Taktgenerator erzeugten Takt fH/2 in
der Frequenz z. B. mit Hilfe einer Kapazitätsdiode
umgeschaltet.

Mit Hilfe der Fig. 5 soll nachstehend die Aufbereitung des zur Synchronisierung dienenden Impulses erläutert werden. Das vom Aufzeichnungsgerät 8 abgegebene Signal wird in einem Wiedergabekanal 10, der aus einem Wiedergabeverstärker, einem Dropoutcompensator, einem Begrenzer, einem FM Demodulator und einer Deemphasis besteht, verstärkt und das Helligkeitssignal Y gelangt von dort über einen vom Taktgeber 3 gesteuerten Schalter 11 während der Zeilenhinlaufzeit an eine Addierstufe 12. In einem Nebenzweig wird mit Hilfe eines vom Taktgeber 3 gesteuerten Speichers 13 und eines PAL-Coders 14 das Farbsignal dekomprimiert wieder über die Addierschaltung 12 zu einem vollständigen FBAS-Signal umgeformt, welches von einem Fernsehempfänger wiedergegeben wird. Die Dekompression geschieht in der Weise, dass der Speicher 13 mit einem Takt von 10 MHZ eingelesen und mit einem Takt von 2 MHZ wieder ausgelesen wird. Das zur Synchronisation des Fernsehempfängers notwendige Synchronsignal wird auf folgende Weise zurückgewonnen und ebenfalls an die Addierstufe 12 gelegt. Das während des Zeilenrücklaufs abgenommene Signal wird über eine das Signal begrenzende und verstärkende Einrichtung 15 an einen Phasendiskriminator 16 geschaltet. Der Phasendiskriminator 16 ist auf eine Frequenz abgestimmt, die zwischen den Trägerfrequenzen der eingetasteten Impulse liegt. Durch den Phasendiskriminator 16 oder eine äquivalente Schaltung werden zeilenfrequente Impulse wechselnder Polarität erzeugt. In einer nachgeschalteten Stufe 23 werden die Impulse derart umgeformt, dass an einem Ausgang A halbzeilenfrequente Impulse abnehmbar sind, die zur Steuerung des PAL-Flip-Flops 24 dienen. Zeilenfrequente Impulse am anderen Ausgang B der Stufe 23 dienen zur Synchronisation des Taktgenerators 3 während der Wiedergabe, welcher die zur Synchronisation des Fernsehempfängers dienenden horizontalfrequenten Impulse H und vertikalfrequenten Impulse V liefert, die in der Addierstufe 12 zu dem Y-Signal und dem Chroma-Signal zur Bildung eines vollständigen FBAS-Signals addiert werden.

Die Erfindung ist allgemein anwendbar bei der Übertragung über Kanäle mit eingeschränkter Qualität wie z.B. bei der Aufzeichnung mit Video-Recordern, Satelliten-Fernsehen oder über Kabelstrecken.

**Patentansprüche**

1. Verfahren zur Übertragung, insbesondere zur Aufzeichnung und Wiedergabe, von Farbfernsehsignalen in analoger Form, wobei die Leuchtdichteinformation während des Hinlaufs der Zeilenperiode und die Farbinformation zeitkomprimiert sequentiell während der restlichen Zeit der Zeilenperiode in der Austastzeit aufgezeichnet wird, wobei zur Kompression und zur Dekompression die digitalisierten Farbsignale mit Hilfe von durch einen Taktgeber erzeugten Taktimpulsen in Speicher eingeschrieben und ausgelesen werden, dadurch gekennzeichnet, dass in das zu übertragende, insbesondere aufzuzeichnende, Signal ein zur Synchronisation dienender Träger eingekoppelt wird, dessen Trägerfrequenz halbzeilenfrequent symmetrisch zu einer Mittenfrequenz umgeschaltet wird und dessen Frequenz und Amplitude so gewählt wird, dass eine Beeinträchtigung der Leuchtdichte- und der Farbinformation vermieden wird.

2. Verfahren nach Anspruch 1, dadurch gekennzeichnet, dass die Einkopplung des zur Synchronisation dienenden trägerfrequenten Impulses während jeder Austastzeit zusammen mit der jeweiligen Farbinformation erfolgt und die Frequenz und Amplitude des Impulses so gewählt sind, dass eine Beeinträchtigung der Farbinformation vermieden wird.

3. Verfahren nach Anspruch 1, dadurch gekennzeichnet, dass bei den Aufzeichnungen die Trägerfrequenz des Synchronträgers im oberen Übertragungsbereich des Magnetkopfsignals des Aufzeichnungsgeräts (8) liegt.

4. Verfahren nach Anspruch 1, dadurch gekennzeichnet, dass die Umschaltung der Trägerfrequenz durch einen vertikalfrequenten Steuertakt V während des Bildrücklaufs unterbrochen wird.

5. Verfahren nach den Ansprüchen 1 bis 3, dadurch gekennzeichnet, dass bei der Wiedergabe das eingekoppelte Synchronsignal nach einer Verstärkung an einen Diskriminator (16) geschaltet ist, der in Abhängigkeit von der Trägerfrequenz Signale verschiedener Polarität liefert.

6. Verfahren nach Anspruch 5, dadurch gekennzeichnet, dass die Mittenfrequenz des Diskriminators (16) zwischen den beiden Trägerfrequenzen der Impulse liegt.

7. Verfahren nach den Ansprüchen 4 und 5, dadurch gekennzeichnet, dass das vom Diskriminator (16) erzeugte Signal einen Oszillator (7) mit einer Regelschleife phasenstarr nachregelt.

8. Verfahren nach Anspruch 7, dadurch gekennzeichnet, dass die Takte für die Horizontalimpulse H, Vertikalimpulse V und der Takt mit halber Zeilenfrequenz fH/2 aus der PLL-Schleife (17, 18, 19, 20) abgeleitet und über den Taktgenerator (3) als kombiniertes Synchronsignal dem demodulierten Farbsignal zugesetzt werden.

9. Verfahren nach Anspruch 5, dadurch gekennzeichnet, dass die vom Diskriminator (16) erzeugten Impulse an eine Inverterstufe (23) geschaltet sind, die mit der Frequenz fH/2 Impulse zur Identifizierung des mit zeilenfrequenten Impulsen geschalteten PAL-Flip-Flop (24) sowie zeilenfrequente Impulse für den Taktgeber (3) liefert.

**Claims**

1. A method for the transcription, particularly for the recording and play-back, of video signals in analogue form, wherein the luminance information is recorded during the forward sweep of the line period and the colour information is recorded in a time compressed sequential manner during the residual time of the line period in the blanking time, whereby, for the compression and for the decompression, the digitalised colour signals are read into and read out of memories with the help of timing pulses produced by a pulsing means, characterised in that the signal to be transcribed, in particular to be recorded, is coupled into a carrier serving for synchronisation, the carrier frequency of which carrier is switched over at half line frequency symmetrically to a centre frequency and whose frequency and amplitude are so chosen that any impairment of the luminance and colour information is avoided.

2. A method according to Claim 1, characterised in that the coupling-in of the carrier frequency pulse serving for synchronisation takes place during each blanking time together with the appropriate colour information, and the frequency and amplitude of the pulse are so chosen that any impairment of the colour information is avoided.

3. A method according to Claim 1, characterised in that during recording the carrier frequency of the synchronous carrier lies in the upper transcription range of the magnetic head signal of the recording equipment (8).

4. A method according to Claim 1, characterised in that the switching over of the carrier frequency is disconnected by a vertical frequency control pulse V during the frame flyback.

5. A method according to Claims 1 to 3, characterised in that during play-back the coupled-in synchronous signal is connected after amplification to a discriminator (16), which supplies signals of different polarity as a function of the carrier frequency.

6. A method according to Claim 5, characterised in that the centre frequency of the discriminator (16) lies between the two carrier frequencies of the pulses.

7. A method according to Claims 4 and 5, characterised in that the signal produced by the discriminator (16) readjusts an oscillator (7) with a control loop in a phase-locked manner.

8. A method according to Claim 7, characterised in that the pulses for the horizontal pulses H, the vertical pulses V and the pulse at half line frequency fH/2 are derived from the PLL-loop (17, 18, 19, 20) and are added to the demodulated colour signal as combined synchronous signal via the pulsing means (3).

9. A method according to Claim 5, characterised in that the pulses produced by the discriminator (16) are connected to an inverter stage (23) which supplies pulses at frequency fH/2 for the identification of the PAL flip-flop (24) switched at line frequency as well as line frequency pulses for the pulsing means (3).

**Revendications**

1. Procédé de transmission, notamment d'enregistrement et de reproduction, de signaux de télévision en couleurs sous forme analogique, selon lequel l'information de luminance pendant le balayage aller du spot au cours de la période d'une ligne et l'information couleur sont enregistrées successivement en étant comprimées dans le temps pendant le reste de l'intervalle de temps de la période d'une ligne, pendant l'intervalle de temps de suppression, et selon lequel, pour la compression et la décompression, les signaux chromatiques numérisés sont enregistrés et lus dans une mémoire au moyen d'impulsions de cadence produites par un générateur de cadence, caractérisé en ce qu'un injecte, dans le signal devant être transmis et notamment enregistré, une porteuse utilisée pour la synchronisation et dont la fréquence est commutée d'une manière symétrique par rapport à la fréquence centrale, et ce à la demi-fréquence des lignes, et dont la fréquence et l'amplitude sont choisies de manière à éviter que l'information de luminance et l'information couleur soient perturbées.

2. Procédé selon la revendication 1, caractérisé en ce que l'injection de l'impulsion à fréquence porteuse, utilisée pour la synchronisation, s'effectue pendant chaque intervalle de suppression, et ce conjointement avec l'information couleur respective, et la fréquence et l'amplitude de l'impulsion sont choisies de manière à éviter que l'information couleur soit perturbée.

3. Procédé selon la revendication 1, caractérisé en ce que, lors de l'enregistrement, la fréquence de la porteuse de synchronisation se situe dans la plage supérieure de transmission du signal de la tête magnétique de l'appareil d'enregistrement (8).

4. Procédé selon la revendication 1, caractérisé en ce que la commutation de la fréquence porteuse est interrompue au moyen d'une cadence de commande V, apparaissant avec la fréquence de balayage vertical, pendant le retour du spot.

5. Procédé selon les revendications 1 à 3, caractérisé en ce que lors de la reproduction, le signal de synchronisation injecté est appliqué, après avoir été amplifié, à un discriminateur (16) qui délivre, en fonction de la fréquence porteuse, des signaux possédant des polarités différentes.

6. Procédé selon la revendication 5, caractérisé en ce que la fréquence centrale du discriminateur (16) se situe entre les deux fréquences porteuses des impulsions.

7. Procédé selon les revendications 4 et 5, caractérisé en ce que le signal produit par le discriminateur (16) règle par asservissement à verrouillage de phase, un oscillateur (7) comportant une boucle de régulation.

8. Procédé selon la revendication 7, caratérisé en ce que les cadences pour les impulsions horizontales H, les impulsions verticales V et la cadence possédant une fréquence égale à la moitié de la fréquence de ligne fH/2 sont tirées de la boucle PLL (17, 18, 19, 20) et sont adjointes en tant que signal de synchronisation combiné, au signal chromatique démodulé. par l'intermédiaire du générateur de cadence (3).

9. Procédé selon la revendication 5, caractérisé en ce que les impulsions produites par le discriminateur (16) sont appliquées à un étage inverseur (23) qui délivre des impulsions, apparaissant à la fréquence fH/2, pour identifier la bascule bistable-PAL (24) branchée au moyen d'impulsions possédant la fréquence des lignes, ainsi que des impulsions possédant la fréquence des lignes pour le générateur de cadence (3).

Fig. 1

Fig. 6

Fig.2

Fig. 3

Fig. 4

Fig. 5